# EUROPEAN PATENT APPLICATION

(11) **EP 0 550 159 A2**
(43) Date of publication of application: **07.07.1993**
(21) Application number: 92311086.0
(22) Date of filing: 04.12.1992
(51) Int. Cl.: H04R 5/02, H04R 1/30, H04R 3/04, H04N 5/64

(54) **Loudspeaker for television set**

(30) Priority: 05.12.1991 FI 915761
(71) Applicant: SALON TELEVISIOTEHDAS OY, SF-24101 Salo (FI)
(72) Inventor: Makivirta, Aki, SF-33720 Tampere (FI); Kuusama, Juha, SF-33720 Tampere (FI); Juhola, Minna, SF-33720 Tampere (FI); Jokinen, Raimo, SF-24260 Salo (FI); Laitinen, Miko, SF-24800 Halikko (FI)
(74) Representative: Singleton, Jeffrey

(57) **Abstract**

Television set (1)having a picture tube (4) enveloped by a housing (8) and having at least one loudspeaker (2), to which an electrical signal is supplied in order to generate an acoustic signal, and which has a mouth (6) opening into the housing (8). The loudspeaker (2) is a horn loudspeaker (2) is curved, so that the neck and the driver (3) of the horn (5) are behind the picture tube (4) and that the horn is curved towards the mouth (6) according to the shape of the backside of the picture tube (4) and extends to the front edge of the television set (1) so that the mouth (6) of the horn is located beside the picture tube (4) at the front edge of the set (1) . The television set (1) further has an equalizer to equalize the response of the loudspeaker (2) and at least one subwoofer to reproduce low frequencies.

## Description

The present invention relates to a television set having a picture tube enveloped by a housing and having at least one horn loudspeaker, to which an electrical signal is supplied in order to generate an acoustic signal, and which has a mouth opening into the housing.

Television sets ordinarily use dynamic loudspeakers occupying 5 to 10 cm in the horizontal direction on each side of the picture tube. In older television sets there is a loudspeaker/-loudspeakers only on one side of the picture tube, but newer stereo sets have a loudspeaker/loudspeakers on each side of the picture tube.

Usually dynamic loudspeakers are used. The efficiency of a dynamic loudspeaker, i.e. the proportion of the electrical energy supplied to the loudspeaker and transformed into sound, is rather low, about 1 to 5 %. The housing in which the loudspeaker is mounted has a very strong influence on the loudspeaker's efficiency, and the efficiency can vary at different sound pitches.

The efficiency of a loudspeaker can be improved by using a horn adapter. The low efficiency of a dynamic loudspeaker is due to the fact that the air load on the loudspeaker's small cone, compared to the wave-length of the signal to be reproduced, is mainly reactive. However, if the loudspeaker's cone would radiate the waves along a channel, the cone would be loaded by a plane wave, which as a load is highly resistive, the magnitude of this mechanical resistance being defined by the cross-sectional area of the channel. A slowly widening horn is a means to obtain an almost resistive load at the neck of the horn at frequencies, which are higher than two times the lower cut-off frequency of the horn, and the mouth of the horn is large enough so that it will function as a mainly resistive load.

Figure 1a shows the essential characteristics of a horn loudspeaker 2. When we speak of a horn loudspeaker we mean a horn which at the same time operates as an impedance adapter, and the horn is supplied with power from a driver 3. The cone 3a of the driver 3 is coupled to the neck K of the horn 5 with an elasticity C_{C} of the air volume. The horn 5 widens from the cross-sectional area S_{K} of the neck to the cross-sectional area S_{S} of the mouth. Above the cut-off frequency the air load at the neck K of the horn 5 is almost resistive, and its mechanical magnitude is Z_{K} = S_{K}R_{S}. This load appears as a mechanical load of the cone 3a having the magnitude Z_{D} = (S_{D}/S_{K})S_{D}R_{S}. Thus, when the impedance of the horn 5 is adapted to the driver 3, a high efficiency is obtained, 10 - 70 %, which is essentially better than in a normal dynamic loudspeaker. Because the horn 5 is not infinite, but is "cut" to a certain length, variations are generated at the pass-band of the amplitude response. This variation is corrected with equalization. Then the efficiency decreases, but is still clearly better than the efficiency of a dynamic loudspeaker.

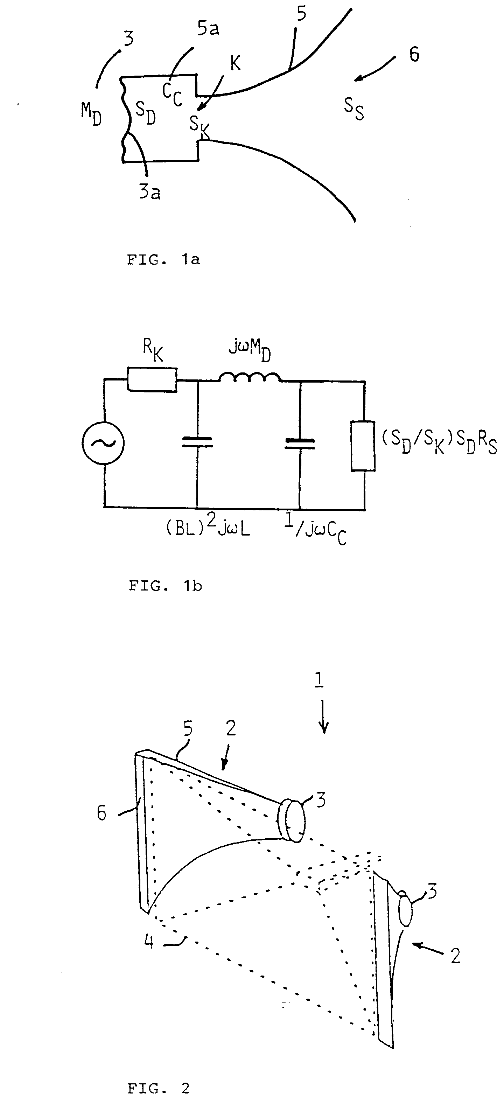

The basic electromechanical equivalent circuit of a horn loudspeaker is shown in figure 1b, which shows that the horn loudspeaker can be represented as a low-pass filter of the third order, having a lower cut-off frequency influenced by the components already described above. The upper cut-off frequency is affected by the inductance L of the voice coil, the mass M_{D} of the cone, and the elasticity C_{C} of the air chamber. It is possible to have a high upper cut-off frequency by having a small mass M_{D} of the cone and a small volume of the air chamber. On the other hand this can cause a decreased efficiency, if the driver load is not of a proper magnitude for the adaptation.

An excellent sound reproduction can be obtained with a horn loudspeaker, but this requires equalization of the amplitude response. A horn loudspeaker can span almost all frequencies required for the audio range, about 300 to 16000 Hz, except the low bass frequencies. A separate subwoofer is required to reproduce the low bass frequencies. The subwoofer can be directed in any direction when the reproduced frequency is lower than 300 Hz. A subwoofer with a frequency response exceeding 300 Hz must be directed against the viewers, because it is not omnidirectional. The equalization reduces the efficiency of the horn loudspeaker, but because the efficiency of the horn loudspeaker is substantially higher than that of a dynamic loudspeaker, an equal amount of electric power produces more acoustic power and thus it is possible to realize the equalization of the amplitude response maintaining a high efficiency. The equalization requires separate equipment, utilizing e.g. digital signal processing.

The object of the present invention is to realize a television set with a loudspeaker occupying a small space in one, such as the horizontal, direction. This may be achieved using a curved horn loudspeaker, which is equalized and the mouth of which is narrow in one direction and tall in another direction. The invention is characterized in that it contains a device to equalize the response of the loudspeaker.

The invention is below described more closely with reference to the enclosed drawings, in which
figure 1a shows the principle of a horn loudspeaker,
figure 1b shows the basic equivalent circuit of a horn loudspeaker,
figure 2 shows a three-dimensional outline for the location and form of a loudspeaker,
figure 3a shows a television set according to prior art, and
figure 3b shows a television set according to the invention, of which figures 1a and 1b were already described above. The invention is described below with reference to the figures 2, 3a and 3b.

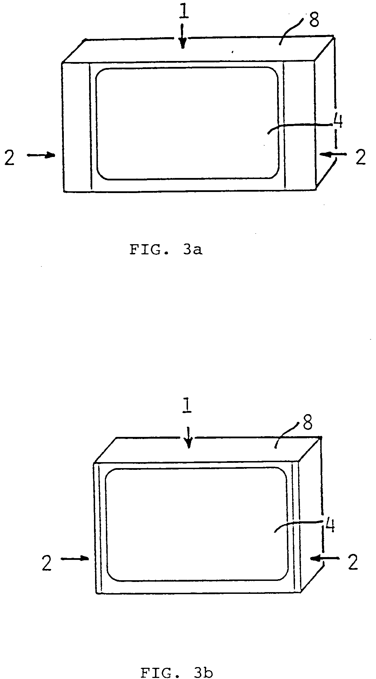

Figure 2 shows the location of the television set 1 loudspeakers 2 on the sides of the set 1 using curved horn loudspeakers 2. The loudspeaker 2 can be placed beside the picture tube so that the driver 3 is left behind the picture tube 4 when a curved horn loudspeaker 2 is used. In this way it is possible to minimize the space occupied by the loudspeakers 2 at the front of the set 1 by utilizing the space at the back of the set 1, which is not visible to the front. The horn 5 of the horn loudspeaker 2 extends from behind the picture tube 4 to the front of the set, and the mouth 6 opening into the set's housing 8 (figure 3b) is shaped so that the space saving is as big as possible. In the horizontal direction the mouth of the horn 5 compared with the wave-length is narrow, about 1 cm, and therefore the horn is almost omnidirectional in the horizontal direction. At frequencies 300 - 16000 Hz a radiation angle is obtained which is larger than ±30°, being at its smallest at low frequencies. The radiation angle depends on the dimensions of the horn and on the reproduced frequency. Thus here is defined no fixed value for the radiation angle. A wide radiation angle is however achieved with the solution according to the invention, at least ±25°, preferably ±30° and even larger. The horn 5 can be e.g. an exponential horn, i.e. the cross-sectional area increases exponentially towards the mouth 6. In this invention the shape of the horn or its widening from the neck towards the mouth is not limited to any determined shape, but any shape can be used. The cross-sectional area may also increase e.g. hyperbolically-exponentially.

When curved horn loudspeakers 2 are used at the sides of the television set 1 the horizontal dimensions of the set can be significantly reduced, figure 3b, compared with a loudspeaker solution according to prior art, figure 3a. Thus the use of horn loudspeakers 2 in television sets provides a designer with more freedom. Further the manufacture of the set is facilitated. The space behind the picture tube 4 can be used to locate the driver 3. A horn loudspeaker 2 can be manufactured of separate parts so that one section of the horn 5 is in the back panel of the set and that the front section of the horn is part of the front panel of the set. The driver 3 of the horn loudspeaker 2 can also be mounted on the back panel of the set 1 with automatic assembling tools. Thus it is also essential for the invention that the horn 5 can be partly made during the pressing phase of the housing, whereby the manufacture of the horn will not cause an extra manufacturing phase, and manufacturing costs are saved.

The television set loudspeaker solution according to the invention can generate with high efficiency the required frequencies of the audio range, about 50 to 16000 Hz, when the combination of a horn loudspeaker and a subwoofer is equalized with digital signal processing parts, the subwoofer reproducing frequencies of 300 Hz and below. The loudspeaker or loudspeakers need not be located on the sides of the picture tube, but they can also be located above and/or below the picture tube. A horn loudspeaker can further be realized as a combination of several horn loudspeakers. Furthermore, the horn of the or each loudspeaker may be part of the housing of the television set.

## Claims

1. Television set (1) having a picture tube (4) enveloped by a housing (8) and having at least one horn loudspeaker (2), to which an electrical signal is supplied in order to generate an acoustic signal, and which has a mouth (6) opening into the housing (8), **characterized** in that it contains a device to equalize the response of the loudspeaker (2).

2. Television set according to claim 1, **characterized** in that the horn (5) of the horn loudspeaker (2) is curved, so that the neck and the driver (3) of the horn (5) are behind the picture tube (4) and that the horn is curved towards the mouth (6) according to the shape of the backside of the picture tube (4) and extends to the front edge of the television set (1) so that the mouth (6) of the horn is located beside the picture tube (4) at the front edge of the set (1).

3. Television set according to claim 1, **characterized** in that the device to equalize the response of the loudspeaker (2) comprises digital signal processing parts.

4. Television set according to any previous claim, **characterized** in that it contains at least one subwoofer.

5. Television set according to claim 1, **characterized** in that the horn (5) of the horn loudspeaker (2) is straight, so that the mouth (6) of the horn is located beside the picture tube (4) at the front edge of the set (1), and that the neck of the horn (5) and the driver (3) are directly behind the mouth (6).

6. Television set according to claim 2 or 5, **characterized** in that the horn loudspeaker (2) is a combination of several horn loudspeakers.

7. Television set according to claim 2 or 5, **characterized** in that the mouth (6) of the loudspeaker (2) opens into the front corner of the set (1), partly on the front and partly on the side of the set (1).

8. Television set according to claim 2 or 5, **characterized** in that the cross-sectional area of the horn (5) of the loudspeaker (2) increases exponentially towards the mouth (6).

9. Television set according to claim 2 or 5, **characterized** in that the mouth (6) of the loudspeaker (2) has the length of the front edge of the set (1) where it is located.

10. Television set according to claim 2 or 5, **characterized** in that the mouth (6) of the loudspeaker (2) on the front edge of the set (1) where it is located, in the direction perpendicular to said edge is narrow compared with the reproduced signal's wave-length, so that a wide radiation angle is obtained in said direction.

11. Television set according to claim 10, **characterized** in that said radiation angle is at least 60°.

12. Television set according to any previous claim, **characterized** in that the set (1) has at least two horn loudspeakers (2).

13. Television set according to any previous claim, **characterized** in that the horn (5) of the loudspeaker (2) is part of the housing (8) of the television set.
